# EUROPEAN PATENT SPECIFICATION

(11) **EP 4 006 191 B1**
(45) Date of publication and mention of the grant of the patent: **06.08.2025**
(21) Application number: 20846997.3
(22) Date of filing: 09.04.2020
(51) Int. Cl.: C22C 38/26, C21D 8/02, C22C 38/04, C22C 38/28, C22C 38/32, C22C 38/48, C22C 38/50, C22C 38/54, C22C 38/00, C21D 1/18, C21D 1/26, C21D 7/06, C21D 9/46, C22B 9/04, C22B 9/18, C22C 38/02, C22C 38/06, C22C 38/20, C22C 38/22, C22C 38/24, C22C 38/42, C22C 38/44, C22C 38/46

(54) **WEAR-RESISTANT STEEL PLATE WITH EXCELLENT SURFACE QUALITY AND PREPARATION METHOD THEREFOR**
VERSCHLEISSFESTER STAHLPLATTE MIT HERVORRAGENDER OBERFLÄCHENQUALITÄT UND VERFAHREN ZU SEINER HERSTELLUNG
PLAQUE D'ACIER RÉSISTANT À L'USURE AYANT UNE EXCELLENTE QUALITÉ DE SURFACE ET SON PROCÉDÉ DE FABRICATION

(30) Priority: 31.07.2019 CN 201910699927
(43) Date of publication of application: 01.06.2022
(73) Proprietor: Jiangyin Xingcheng Special Steel Works Co., Ltd, Jiangyin, Jiangsu 214434 (CN)
(72) Inventor: LIU, Jun, Jiangyin, Jiangsu 214434 (CN); LI, Guozhong, Jiangyin, Jiangsu 214434 (CN); YANG, Yang, Jiangyin, Jiangsu 214434 (CN); XU, Xiaohong, Jiangyin, Jiangsu 214434 (CN); WU, Jinming, Jiangyin, Jiangsu 214434 (CN); MIAO, Pifeng, Jiangyin, Jiangsu 214434 (CN); XU, Guoqing, Jiangyin, Jiangsu 214434 (CN); WANG, Xiaoshuang, Jiangyin, Jiangsu 214434 (CN)
(74) Representative: Huang, Liwei
(86) International application number: PCT/CN2020/083992
(87) International publication number: WO 2021/017520

(56) References cited:
- EP-A1- 3 098 331
- WO-A1-2018/117482
- WO-A1-2018/117482
- WO-A1-2018/215600
- CN-A- 101 451 218
- CN-A- 110 499 456
- JP-A- H0 551 691
- KR-A- 20130 046 967
- US-A1- 2020 157 651

## Description

### Technical field

The invention relates to the technical field of iron-based alloys, in particular to a wear-resistant steel plate with excellent surface quality and a production method thereof.

### Background art

Wear resistant steel plates are widely used in key parts of mechanical equipment requiring high strength and good wear resistance in engineering machinery, mining and transportation, road transportation and other industries, such as excavator bucket, scraper conveyor middle slot, mining dump truck bucket and so on. In recent years, domestic wear-resistant steel manufacturers have done a lot of work on how to improve the comprehensive mechanical properties of steel plates. For example, the inventions with Chinese patent CN104451409A, CN103014543A, CN102747280B and CN106521314B have been reported in terms of surface hardness, overall hardness, high toughness and easy welding.

With the further development of construction machinery and equipment, equipment manufacturers put forward more and more strict requirements for the control of surface defects of wear-resistant steel plate. On the one hand, surface defects will become the crack source of various failure cracks; On the other hand, it affects the appearance of the equipment. The steel plate manufacturer adopts local grinding for surface defects without affecting the thickness of the steel plate, but this has a great impact on the later painting of equipment surface, resulting in uneven paint film and greatly affecting the surface quality. It is an urgent problem for steel plate manufacturers to develop high surface quality and easy to weld wear-resistant steel plate without grinding.

EP 3098331A1 dislcoses some wear-resistant steel plates and producing methods thereof. WO2018/215600 A describes an abrasion-resistant steel plate used in applications such as in lifting and excavating applications.

### Detailed description of the invention

The invention aims to provide a low alloy easy welding wear-resistant steel plate with excellent surface quality and a production method thereof.

The invention is set out in the appended set of claims

The microstructure of the low alloy wear-resistant steel plate is fine tempered martensite; Tensile strength ≥ 1200Mpa, elongation ≥ 12%, -40°C Charpy V-shaped longitudinal impact energy ≥ 30J; Brinell hardness shall meet 360-460HB. The surface quality of the steel plate is good, and there are no surface defects such as pores, inclusions, pits and pressed iron oxide scale. The steel plate needs not to be polished, and the depth of surface spots caused by the falling of iron oxide scale is ≤ 0.1mm. The steel plate has good weldability, and the carbon equivalent CEV ≤ 0.40; the welding crack sensitivity coefficient PCM ≤ 0.25. It can receive direct non-preheating welding.

A wear-resistant plate with excellent surface quality, the chemical constituents are C:
0.12-0.20%, Si: ≤ 0.1%, Mn: 0.6-1.20%, Nb: 0.010-0.040%, V: ≤ 0.01%, Ti: 0.010 - 0.030%, Al: ≤ 0.04%, Ni: ≤ 0.1%, Cu: ≤ 0.1%, Cr: 0.10 - 0.40%, Mo: ≤ 0.1%, B: 0.001 - 0.005%, Ca: 0.0010 - 0.0050%, P: ≤ 0.010%, s: ≤ 0.0015%, O: ≤ 0.0012%, N: ≤ 0.0035%, H: ≤ 0.0002%, and the balance is Fe and unavoidable impurity elements.

According to the formula CEV=C+Mn/6+(Cr+Mo+V)/5+(Ni+Cu)/15, its chemical constituents of the carbon equivalent CEV ≤ 0.40; According to the formula PCM=C+Si/30+(Mn+Cu+Cr)/20+Ni/60+Mo/15+V/10+5B, the welding crack sensitivity coefficient PCM ≤ 0.25.

In order to realize non-preheating welding and excellent toughness, the invention controls the carbon equivalent CEV ≤ 0.4; PCM ≤ 0.25;

The thickness of the low alloy easy welding wear-resistant steel plate with excellent surface quality is 4-20mm.

The design principle of steel constituents in the invention is as follows:
C: Carbon is the most basic and important element in wear-resistant steel, which determines the hardness level, toughness and weldability of steel plate. Low carbon content, low hardness, good toughness and excellent weldability; High carbon content, high strength and high hardness, but the plastic toughness of the steel plate is reduced, and the weldability is poor. Based on the design hardness of the steel plate is 360HB-460HB and considering the toughness and welding performance of the steel plate, the carbon content in the invention is controlled to be 0.12-0.20%.

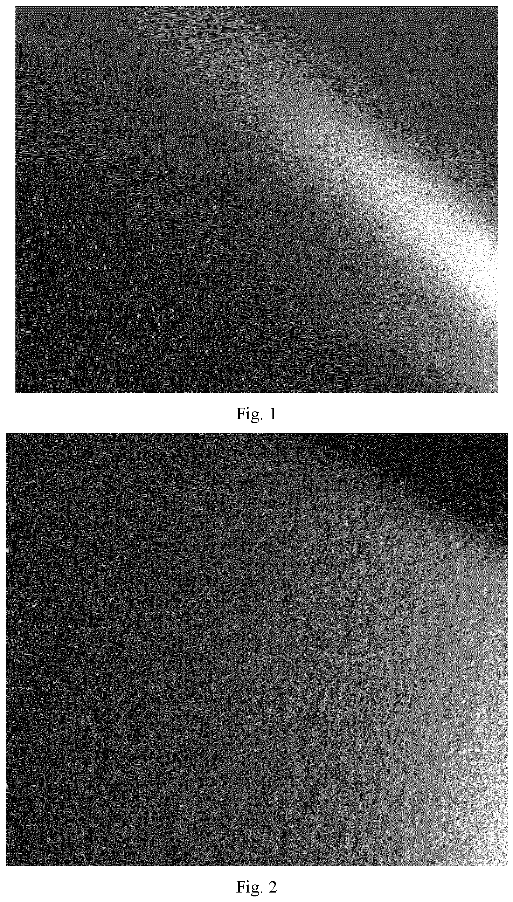

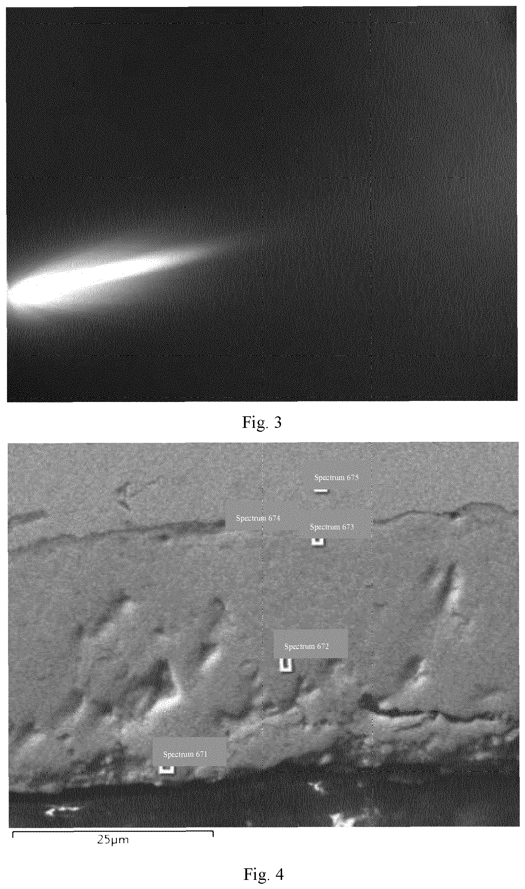

Si: Solid solution of silicon in ferrite and austenite improves strength and hardness. Too high content will deteriorate the toughness of martensitic steel, increase the sensitivity of welding crack and reduce the surface quality. This study shows that there is an important relationship between Si content and shallow oxide spots on the surface of wear-resistant steel. As shown in Fig. 1, when the Si content is 0.25%, there are most secondary oxide spots with a depth of 0.02-0.2mm on the surface of wear-resistant steel. When the Si content is 0.15%, after shot blasting, the spot depth decreases to less than 0.15mm, as shown in Fig. 2. When the Si content is reduced to 0.05%, there are no surface defects such as spots after shot blasting, and the quality is good, as shown in Fig. 3. This study shows that when there is a certain Si content in the wear-resistant steel, it is easy to form a certain Fe₂SiO₄ compound between the iron oxide scale and the base, which increases the viscosity of the iron oxide scale and is difficult to be removed in the descaling process, so it is pressed in during steel rolling, resulting in a shallow layer of spot defects on the surface of the wear-resistant steel, as shown in Fig. 4. This study shows that when the Si content in the wear-resistant steel is ≤ 0.1%, the surface quality of the steel plate is good, and there are no obvious defects after shot blasting, which can meet the high standard surface quality requirements of customers and reduce the welding crack sensitivity coefficient of the steel plate. Therefore, the invention strictly controls the Si content of wear-resistant steel ≤ 0.1%.

Mn: strongly improve the hardenability of steel and reduce the critical cooling rate of martensitic transformation. When the content of manganese is low, the above effect is not obvious, and the strength and toughness of the steel plate are low. When it is too high, it tends to coarsen the grain, and at the same time, it will cause segregation of continuous casting slab to form MnS, poor toughness and lower weldability. Therefore, considering the comprehensive addition of alloy, the invention specifies that the addition amount of manganese content is in the range of 0.80-1.30%.

Nb: it is a strong forming element of C and N compounds, which plays a role in pinning the austenite grain boundary and inhibiting the growth of austenite grain during heating. The strength and toughness of the steel are significantly improved by grain refinement. When the addition amount is less than 0.010%, the effect is not obvious. When it is more than 0.040%, it is easy to segregate at the grain boundary and reduce the toughness. Therefore, the invention stipulates that the niobium content shall be in the range of 0.010-0.040%.

Ti: Ti is a strong carbide forming element. TiC particles are fine and distributed at the grain boundary, to reach effect of refining steel plate and welding the grain, improve the wear resistance of steel plate. However, if the Ti content is too high, it is easy to form micron sized liquid precipitation TiN, which is unfavorable to the low-temperature impact properties of the steel plate; In order to obtain better weld performance, the Ti content is controlled at 0.010%-0.030%.

Al: refine grain elements, ensure the formation of fine Ti particles and ensure the toughness of steel plate. Too high Al content will lead to the formation of too many Al₂O₃ inclusions and affect the surface quality of steel plate; At the same time, because the wear-resistant steel adopts the low Si design, the high Al content will reduce the SiO₂ in the top slag in the smelting process and increase the Si content in the molten steel, thus affecting the formation of secondary iron oxide scale in the later stage. Therefore, the invention stipulates that the Al content is ≤ 0.04%.

Ni and Cu: the most commonly used elements to effectively improve the low temperature toughness of steel. However, due to the high price and poor economy, the invention cancels the addition of Ni and Cu, which greatly improves the cost competitiveness of the invented steel grade.

Cr: reduce the critical cooling rate of martensitic transformation and improve the hardenability. Too high Cr will reduce the weldability of steel plate. The chromium content in the invention is controlled at 0.10-0.40%.

Mo: an element to improve the hardenability of steel, which is conducive to the formation of full martensite during quenching. However, due to the high price and poor economy, the addition of Mo is cancelled in the invention to improve the cost competitiveness of the invented steel grade.

B: The invention adds 0.001-0.005% trace B, and its main purpose is to improve the hardenability of the steel plate, so as to reduce the addition of other precious metals and reduce the cost. More than 0.005% B is easy to produce segregation and form boride, which seriously worsens the toughness of the steel plate.

Ca: Ca treatment is usually used for inclusion denaturation treatment to change long strip inclusions such as MnS into spherical inclusions such as CaS, reduce the anisotropy of steel plate and improve the comprehensive properties of steel plate. The invention controls the Ca content at 0.0010%-0.0050%.

P and S: harmful elements, which have adverse effects on the plasticity and toughness of the material. The invention pursues pure steel, reduces the influence of inclusions on surface quality, and strictly controls P content ≤ 0.01% and S content ≤ 0.0015%.

O, N, H: harmful gas elements with high content and many inclusions, which are easy to produce white spots, greatly reduce the plasticity and toughness of the steel plate and affect the welding performance. At the same time, it is easy to form inclusion defects on the surface of the steel plate and affect the surface quality. The invention strictly controls the O content not higher than 0.0012%; N content is not higher than 0.0035%; H content ≤ 0.0002%.

The invention also provides a production method of the above low alloy easy welding wear-resistant steel plate with excellent surface quality. The specific process is as follows,
Smelting process: Adopt converter smelting, Control basicity of final slag from converter R (CaO/SiO₂) ≥ 3, conduct slag cut-off operation, and control slag dropping per ton of steel within 3kg. Effectively control the increase of Si in molten steel caused by tapping slag; Send molten steel to LF refining furnace for refining, and control the oxidation of refining slag, so as to control the content of FeO+MnO ≤ 2%, SiO₂ ≤ 8%, Al₂O₃ ≤ 15%-35%; Ensure the refining time is not more than 1 hour to avoid large increase of Si in molten steel; Send molten steel to VD or RH vacuum treatment, vacuum degree ≤ 0.5mbar.for not less than 30min, reduce the generation of pores. After degassing the molten steel, use the calcium iron wire to replace the traditional silicon calcium wire for Ca treatment; inclusions are so controlled that a sum of the Grades of Group A, B, C and D is ≤ 2.5, to avoid surface inclusion.

Continuous casting process: in order to control the internal porosity and segregation of steel plate, conduct low overheat pouring under whole process argon protection and conduct dynamic soft reduction control. Control the overheat of molten steel at 5-20°C and keep the center segregation no higher than grade C1.0.

Heating process: This study shows that when the heating temperature is greater than 1180°C, Fe₂SiO₄ reacts with FeO to produce molten binary eutectic, which will promote the local oxidation reaction of slab, lead to the difficulty of subsequent descaling, and cause the formation of oxide pressing defects. The invention adopts a relatively low heating temperature and controls the heating temperature of the slab at 1100-1180°C. Control the time of soaking section in the furnace, no greater than 1 hour.

Steel rolling process: carry out high pressure water descaling before steel plate rolling, and control the descaling pressure at the nozzle above 21MPa. Carry out high pressure descaling at the start of rough rolling and the last two passes of rough rolling to fully remove the primary iron oxide scale. This study shows that when the steel plate is above 1050°C, the high-temperature slab will quickly produce secondary iron oxide scale. The invention controls the head and tail temperature of the intermediate slab after rough rolling to be lower than 1000°C. In order to shorten the high temperature waiting time of the steel plate and control the grain size uniformity of the steel plate, the start rolling temperature of the finishing rolling in the invention is controlled at ≥ 930°C. High pressure water descaling shall be adopted for the start of finish rolling, the total number of passes with descaling during finish rolling shall not be less than 3 passes, and the final rolling temperature shall be controlled at ≥ 820°C. Accelerated cooling is not adopted for the steel plate to avoid the generation of multiple iron oxide scale.

Surface treatment: the steel plate must be shot blasted before heat treatment to completely remove the complete and dense oxide scale on the steel plate surface and avoid the press in defects in the subsequent straightening treatment.

Quenching (water quenching) heat treatment process: the steel plate is quenched after rolling. The quenching temperature is 880-940°C, and the holding time is 20-60min after the furnace temperature reaches the temperature. In order to ensure the uniformity of the steel plate, the temperature control accuracy is ±10°C.

Tempering process: the steel plate is tempered at low temperature, and the temperature is controlled at 150-250°C. After the furnace temperature reaches the temperature, the holding time is 30-60min. In order to ensure the uniformity of the steel plate, the temperature control accuracy is ±10°C.

Compared with the existing production technology of wear-resistant steel, the invention favors:
Eliminate the addition of Si and Mo elements in the chemical constituents design, which reduces the alloy cost of the steel plate. Controls the Si content ≤ 0.1%, and avoids the formation of Fe₂SiO₄ compound at the boundary between the wear-resistant steel base and iron oxide scale, resulting in the decline of the surface quality of the steel plate; At the same time, reduce the welding crack sensitivity of steel plate;
The chemical constituents adopt a low carbon equivalent design, and the CEV of steel plate is ≤ 0.40; Welding crack sensitivity coefficient PCM ≤ 0.25, to realize non-preheating welding;
The invention adopts converter smelting. Control basicity of final slag from converter R (CaO/SiO₂) ≥ 3, conduct slag cut-off operation, and control slag dropping per ton of steel within 3kg. Effectively control the increase of Si in molten steel caused by tapping slag; Send molten steel to LF refining furnace for refining, and control the oxidation of refining slag, so as to control the content of FeO+MnO ≤ 2%, SiO₂ ≤ 8%, Al₂O₃ ≤ 15%-35%; Ensure the refining time is not more than 1 hour to avoid large increase of Si in molten steel; inclusions are so controlled that a sum of the Grades of Group A, B, C and D is ≤ 2.5, which can improve the impact toughness of the steel plate at ultra-low temperature, and avoid surface inclusion defects;
The invention adopts a relatively low heating temperature and controls the heating temperature of the slab at 1100-1180°C. Control the time of soaking section in the furnace, no greater than 1 hour.

The invention carries out high-pressure water descaling before steel plate rolling, and controls the descaling pressure at the nozzle to be more than 21MPa. Carry out high pressure descaling at the start of rough rolling and the last two passes to fully remove the primary scale, and quickly reduce the surface temperature of steel plate to avoid secondary oxidation; The invention controls the temperature of the head and tail of the intermediate slab after rough rolling to be lower than 1000°C.

In order to shorten the high temperature waiting time of the steel plate, the invention appropriately increases the finish rolling start-up temperature and controls it at ≥ 930°C. In order to quickly reduce the rolling temperature, conduct high pressure water descaling for the start of finish rolling. the total number of passes with descaling during finish rolling shall not be less than 3 passes, and control the final rolling temperature at ≥ 800°C. Accelerated cooling, such as water cooling, is not adopted for the rolled steel plate to avoid the generation of multiple iron oxide scales. Adopt stack slow cooling or cover slow cooling or air cooling for cooling.

The steel plate must be shot blasted before heat treatment to completely remove the complete and dense oxide skin on the steel plate surface, so as to avoid the press in defects in subsequent quenching and tempering and steel plate finishing.

The surface quality of the steel plate produced by the invention is good, free from surface defects such as air pit, inclusion, hemp pit and pressed iron oxide scale. The depth of surface spots caused by the peeling off iron oxide scale is ≤ 0.1mm, and the surface grinding of steel plate cannot be carried out.

The method of the invention can be spread and applied to other steel plates, in industries such as high-strength marine ship, high-rise building, bridge, construction machinery, pressure vessel steel, etc.

### Description of the Attached Drawings

Fig. 1 shows the surface quality of steel plate with 0.25% Si.
Fig. 2 shows the surface quality of steel plate with 0.15% Si.
Fig. 3 shows the surface quality of steel plate with 0.05% Si.
Fig. 4 shows the constituents analysis of iron oxide scale on the surface of steel plate with 0.25% Si.
Fig. 5 shows the surface quality of a 12mm thick steel plate of embodiment 1.

### Detailed description of embodiments

The invention is described in further detail below in combination with embodiments.

Taking the steel plate as an example, the production process of the wear-resistant steel of the invention is: converter smelting -> LF refining -> VD or RH high vacuum degassing -> continuous casting -> heating -> rolling -> shot blasting -> quenching -> tempering.

The invention is further described below in combination with embodiments 1-2. See Table 1 for specific chemical constituents of embodiment 1-2. Steel plate carbon equivalent CEV ≤ 0.4 and welding crack sensitivity coefficient PCM ≤ 0.25 can realize non-preheating welding.

The production method of low alloy easy welding wear-resistant steel plate with excellent surface quality according to embodiments 1-2 of the invention comprises the following steps:
(1) Smelting: Adopt 150-ton converter for smelting. Control basicity of final slag from converter R (CaO/SiO₂) ≥ 3.0, produce molten steel from converter, and control slag dropping per ton of steel ≤2kg; Refer to Table 2 for detailed process parameters of converter smelting. Send steel to LF refining furnace for refining, and control the content of FeO+MnO ≤ 2.0%, SiO₂ content ≤ 8%, Al₂O₃ content ≤ 15%-35%; Ensure the refining time at 30-60min; Send the refined molten steel to RH for degassing. The pressure is 0.5mbar, and the time is 30-50min. See Table 3 for specific refining process parameters.
(2) Continuous casting: Cast molten steel into 150 mm thick continuous casting slab. Control the casting temperature at 5-20°C above the liquidus. Implement dynamic soft reduction in the casting process, and control the plate at C05-C1.0
(3) Rolling: Put the continuous casting slab obtained in step (2) into a walking beam heating furnace with a heating temperature of 1100-1180°C and a soaking period of 30-60min; After the slab is discharged from the furnace, it is descaled by high-pressure water with a descaling pressure of 21MPa; Rough rolling is carried out after treatment. High pressure descaling shall be carried out for the first and last two passes of rough rolling (i.e. high pressure water descaling shall be matched for the passes with high reduction rate), and the waiting temperature of steel plate shall be 930-1000°C. Final temperature of finish rolling ≥ 800°C. The passes with descaling during finish rolling shall not be less than 3 passes. See Table 4 for specific process parameters related to rolling.
(4) Shot blasting: put the steel plate obtained in step (3) into the shot blasting equipment for shot blasting to completely remove the dense oxide scale on the surface of the steel plate.
(5) Quenching + tempering: the steel plate is quenched after shot blasting, the quenching temperature is 910°C, the holding time is 40min, and the quenching medium is water. After quenching, the steel plate is tempered at low temperature. The tempering temperature is 200°C and the holding time is 40min.

See Table 5 for the steel plate properties corresponding to examples 1-2. The results show that the steel plate has excellent mechanical properties, tensile strength ≥ 1200MPa, elongation ≥ 12%, Charpy V-shaped longitudinal impact energy ≥ 30J at -40°C; Brinell hardness shall meet 360-460HB.

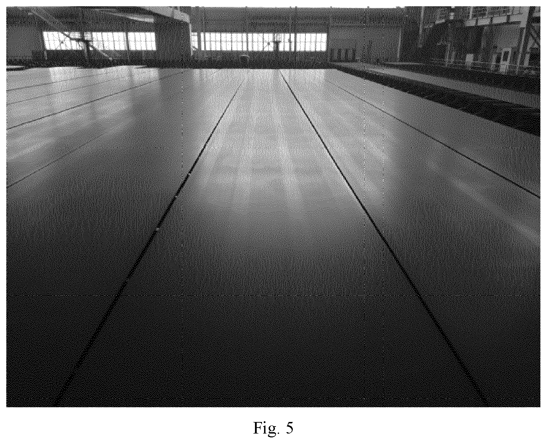

See Fig. 3 and Fig. 5 for the steel plate surface of the embodiment. The results show that the surface quality of the steel plate is good, there are no defects such as pores, inclusions, pits and oxide scale spots. There is no need for grinding treatment, and the surface quality is excellent. For comparison, the surface quality of steel plates with different Si content is shown in Fig. 1 and 2. Fig. 1 and 2 show the surface quality of steel plate obtained when the Si content of traditional wear-resistant steel is greater than 0.1%.

The invention reasonably designs the alloy constituents such as C and Si and their ratio, reduces the alloy cost, and reasonably designs the smelting, steel rolling and heat treatment processes, so that the obtained steel plate has excellent mechanical properties and welding properties; At the same time, the surface quality of steel plate is excellent, which provides feasibility for the production of engineering equipment with high standard surface quality requirements, and has the advantages and prospects of mass production and application.

**Table 1 chemical constituents of wear resistant steel plate in embodiment (wt%)**

| Embodiment | C | Si | Mn | P | S | Cr | Nb | Al | B | O | N | H | CEV | Pcm |
|---|---|---|---|---|---|---|---|---|---|---|---|---|---|---|
| 1 | 0.13 | 0.05 | 1.00 | 0.009 | 0.001 | 0.40 | 0.015 | 0.025 | 0.0020 | 0.0008 | 0.0030 | 0.0001 | 0.38 | 0.21 |
| 2 | 0.17 | 0.05 | 1.10 | 0.008 | 0.0008 | 0.20 | 0.020 | 0.030 | 0.0015 | 0.0010 | 0.0025 | 0.00015 | 0.39 | 0.24 |

**Table 2 Smelting process parameters of converter in embodiment**

| Embodiment | SiO₂ % | CaO % | Basicity R | Slag Kg/ton |
|---|---|---|---|---|
| 1 | 13.58 | 45.26 | 3.33 | 2 |
| 2 | 13.16 | 45.13 | 3.43 | 1.8 |

**Table 3 Refining process parameters of embodiment**

| Embodiment | FeO % | MnO % | FeO+MnO % | SiO₂ % | Al₂O₃ % | Refining time, min | Degassing time, min |
|---|---|---|---|---|---|---|---|
| 1 | 1.3 | 0.53 | 1.83 | 6.78 | 24.62 | 35 | 40 |
| 2 | 1.2 | 0.67 | 1.87 | 7.31 | 30.18 | 40 | 40 |

**Table 4 Rolling process control**

| Embodiment | Product thickness specification, mm | slab heating temperature, °C | Soaking time, min | Descaling passes of finish rolling | Finish rolling waiting temperature, °C | Descaling passes of finish rolling | Final temperature of finish rolling, °C |
|---|---|---|---|---|---|---|---|
| 1 | 12 | 1160 | 40 | 3 | 950 | 3 | 820 |
| 2 | 20 | 1170 | 50 | 3 | 940 | 4 | 810 |

**Table 5 Mechanical properties of embodiments of the invention**

| Embodiment | Thickness mm | Surface hardness | Transverse tension | | | Impact energy Akv, J | | | |
|---|---|---|---|---|---|---|---|---|---|
| | | | Yield strength Pa | Tensile strength MPa | Elongation% | | | | |
| 1 | 12 | 378 | 1123 | 1247 | 15.5 | -40°C | 47 | 54 | 48 |
| 2 | 20 | 456 | 1294 | 1434 | 14.0 | -40°C | 52 | 56 | 46 |

## Claims

1. A wear-resistant steel plate with excellent surface quality, **characterized in that** chemical constituents by mass percentage are C: 0.12-0.20%, Si: ≤ 0.1%, Mn: 0.6-1.20%, Nb: 0.010-0.040%, V: ≤ 0.01%, Ti: 0.010 - 0.030%, Al: ≤ 0.04%, Ni: ≤ 0.1%, Cu: ≤ 0.1%, Cr: 0.10 - 0.40%, Mo: ≤ 0.1%, B: 0.001 - 0.005%, Ca: 0.0010 - 0.0050%, P: ≤ 0.010%, s: ≤ 0.0015%, O: ≤ 0.0012%, N: ≤ 0.0035%, H: ≤ 0.0002%, and the balance is Fe and unavoidable impurity elements;
wherein the steel has a tensile strength of ≥ 1200MPa, an elongation of ≥ 12%, and Charpy V-shaped longitudinal impact energy at -40°C of ≥ 30J; Brinell hardness meets 360-460 HB.

2. The wear-resistant steel plate with excellent surface quality according to claim 1, wherein its chemical constituents meet that the carbon equivalent value CEV is ≤ 0.40 according to a formula CEV=C+Mn/6+(Cr+Mo+V)/5+(Ni+Cu)/15; according to a formula PCM=C+Si/30+(Mn+Cu+Cr)/20+Ni/60+Mo/15+V/10+5B, the welding crack sensitivity coefficient PCM ≤ 0.25.

3. The wear-resistant steel plate with excellent surface quality according to claim 1, wherein, when the product is a steel plate, the thickness of the steel plate is 4-20 mm.

4. A method for producing the wear-resistant steel plate of any of the claims 1 to 3, comprising the following steps:
(1) Smelting
smelting by converter, controlling basicity of final slag R (CaO/SiO2) ≥ 3, conducting slag cut-off, and the slag per ton of steel is controlled to be ≤ 3 kg; sending molten steel to LF refining furnace for refining, the content of FeO+MnO in the slag is controlled to be ≤ 2%, and SiO₂ content ≤ 8%, Al₂O₃ content ≤ 15%-35%; the refining time ≤ 1 hour; sending the refined molten steel to VD or RH for vacuum treatment, where the degree of vacuum is ≤ 0.5 mbar, and the time is no lower than 30 min; using calcium iron wires to replace traditional silicon calcium wires for Ca treatment; inclusions are so controlled that a sum of the Grades of Group A, B, C and D is ≤ 2.5;
(2) Continuous casting
pouring at low overheat and under argon protection during the whole process, and adopting a dynamic soft reduction control;
(3) Heating and rolling
slab heating temperature is controlled at 1100-1180°C; controlling that the soaking period of slab in the furnace does not exceed 1 hour;
conducting high pressure water descaling before starting a steel plate rolling, carrying out high pressure descaling at the first pass and the last two passes of rough rolling; controlling the temperature of a head and a tail of an intermediate slab after the rough rolling ≤ 1000°C; increasing a finish-rolling start temperature to ≥ 930°C; in order to quickly reduce the rolling temperature, high-pressure water descaling is used before the finishing rolling, the total number of the passes with descaling during the finish rolling is not less than 3 passes, and controlling the final rolling temperature at ≥ 800°C; for the rolled steel plate, an accelerated cooling, such as water cooling, is prohibited;
(4) Shot blasting
the steel plate must be shot blasted before heat treatment, to remove a complete and dense oxide scale on the surface of the steel plate;
(5)Quenching & tempering
the steel plate is quenched at 880-940°C, and the holding time is 20-60 min after the furnace temperature reaches the desired temperature; the steel plate is tempered at a low temperature, the tempering temperature is 150-250°C, and the holding time is 30-60 min after the furnace temperature reaches the desired temperature.

5. The method for producing wear-resistant steel plate with excellent surface quality according to claim 4, **characterized in that** in step (3), the overheat of the molten steel is controlled at 5-20°C, and the center segregation is not higher than grade C1.0.

6. The method for producing wear-resistant steel plate with excellent surface quality according to claim 4, **characterized in that** in step (4), when descaling with high-pressure water, the descaling pressure at the nozzle is ≥ 21MPa.

7. The method for producing wear-resistant steel plate with excellent surface quality according to claim 4, **characterized in that** the accuracy of temperature control for quenching and tempering in step (5) is ±10°C.

8. The method for producing wear-resistant steel plate with excellent surface quality according to claim 4, **characterized in that**: in step (3), for the rolled steel plate, water cooling is strictly prohibited, and stacking slow cooling or covering slow cooling or air cooling is adopted for cooling.

## Patentansprüche

1. Verschleißfeste Stahlplatte mit hervorragender Oberflächenqualität, **dadurch gekennzeichnet, dass** chemische Bestandteile in Masseprozent C: 0,12-0,20 %, Si: ≤ 0,1 %, Mn: 0,6-1,20 %, Nb: 0,010-0,040 %, V: ≤ 0,01 %, Ti: 0,010 - 0,030 %, Al: ≤ 0,04 %, Ni: ≤ 0,1 %, Cu: ≤ 0,1 %, Cr: 0,10 - 0,40 %, Mo: ≤ 0,1 %, B: 0,001 - 0,005 %, Ca: 0,0010 - 0,0050 %, P: ≤ 0,010 %, s: ≤ 0,0015 %, O: ≤ 0,0012 %, N: ≤ 0,0035 %, H: ≤ 0,0002 % sind und der Rest Fe und unvermeidbare Verunreinigungselemente ist;
wobei der Stahl eine Zugfestigkeit von ≥ 1200 MPa, eine Dehnung von ≥ 12 % und eine V-förmige Charpy-Längsaufprallenergie bei -40 °C von ≥ 30 J aufweist; wobei Brinell-Härte 360-460 HB erfüllt.

2. Verschleißfeste Stahlplatte mit hervorragender Oberflächenqualität nach Anspruch 1, wobei ihre chemischen Bestandteile erfüllen, dass der Kohlenstoffäquivalentwert CEV ≤ 0,40 gemäß einer Formel CEV=C+Mn/6+(Cr+Mo+V)/5+(Ni+Cu)/15 ist; wobei gemäß einer Formel PCM=C+Si/30+(Mn+Cu+Cr)/20+Ni/60+Mo/15+V/10+5B der Schweißrissempfindlichkeitskoeffizient PCM ≤ 0,25 ist.

3. Verschleißfeste Stahlplatte mit hervorragender Oberflächenqualität nach Anspruch 1, wobei, wenn das Produkt eine Stahlplatte ist, die Dicke der Stahlplatte 4-20 mm ist.

4. Verfahren zum Produzieren der verschleißfesten Stahlplatte nach einem der Ansprüche 1 bis 3, umfassend die folgenden Schritte:
(1) Schmelzen
Schmelzen durch Konverter, Steuern von Basizität von finaler Schlacke R (CaO/SiO2) ≥ 3, Durchführen von Schlackenabtrennung, und die Schlacke pro Tonne Stahl wird auf ≤ 3 kg gesteuert; Senden von geschmolzenem Stahl an LF-Raffinationsofen zur Raffination, der Gehalt an FeO+MnO in der Schlacke wird auf ≤ 2 % gesteuert und SiO₂-Gehalt ≤ 8 %, Al₂O₃-Gehalt ≤ 15 %-35 %; die Raffinationszeit ≤ 1 Stunde; Senden des raffinierten geschmolzenen Stahls zu VD oder RH für Vakuumbehandlung, wobei der Grad an Vakuum ≤ 0,5 mbar ist und die Zeit nicht weniger als 30 min ist; Verwenden von Kalziumeisendrähten, um herkömmliche Siliziumkalziumdrähte für Ca-Behandlung zu ersetzen; Einschlüsse werden so gesteuert, dass eine Summe der Grade der Gruppe A, B, C und D ≤ 2,5 ist;
(2) Stranggießen
Vergießen bei niedriger Überhitzung und unter Argonschutz während des gesamten Prozesses und Übernehmen einer dynamischen Weichreduktionssteuerung;
(3) Erhitzen und Walzen
Brammenheiztemperatur wird bei 1100-1180 °C gesteuert; Steuern, dass die Einweichperiode von Bramme in dem Ofen 1 Stunde nicht überschreitet;
Durchführen von Hochdruckwasserentzunderung vor Beginn eines Stahlplattenwalzens, Ausführen von Hochdruckentzunderung bei dem ersten Durchgang und den letzten zwei Durchgängen des Vorwalzens; Steuern der Temperatur eines Kopfes und eines Endes einer Zwischenbramme nach dem Grobwalzen ≤ 1000 °C; Erhöhen einer Fertigwalzstarttemperatur auf ≥ 930 °C; um die Walztemperatur schnell zu reduzieren, wird Hochdruckwasserentzunderung vor dem Fertigwalzen verwendet, wobei die Gesamtanzahl der Durchgänge mit Entzunderung während des Fertigwalzens nicht weniger als 3 Durchgänge ist, und Steuern der Finalwalztemperatur bei ≥ 800 °C; für die gewalzte Stahlplatte ist eine beschleunigte Kühlung wie Wasserkühlung verboten;
(4) Sandstrahlen
die Stahlplatte muss vor Wärmebehandlung sandgestrahlt werden, um eine vollständige und dichte Oxidablagerung auf der Oberfläche der Stahlplatte zu entfernen;
(5) Abschrecken & Anlassen
die Stahlplatte wird bei 880-940 °C abgeschreckt, und die Haltezeit ist 20-60 min, nachdem die Ofentemperatur die gewünschte Temperatur erreicht; die Stahlplatte wird bei einer niedrigen Temperatur angelassen, die Anlasstemperatur ist 150-250 °C, und die Haltezeit ist 30-60 min, nachdem die Ofentemperatur die gewünschte Temperatur erreicht.

5. Verfahren zum Produzieren einer verschleißfesten Stahlplatte mit hervorragender Oberflächenqualität nach Anspruch 4, **dadurch gekennzeichnet, dass** in Schritt (3) die Überhitzung des geschmolzenen Stahls bei 5-20 °C gesteuert wird und die Mittelsegregation nicht höher als Grad C1.0 ist.

6. Verfahren zum Produzieren einer verschleißfesten Stahlplatte mit hervorragender Oberflächenqualität nach Anspruch 4, **dadurch gekennzeichnet, dass** in Schritt (4) beim Entzundern mit Hochdruckwasser der Entzunderungsdruck an der Düse ≥ 21 MPa ist.

7. Verfahren zum Produzieren einer verschleißfesten Stahlplatte mit hervorragender Oberflächenqualität nach Anspruch 4, **dadurch gekennzeichnet, dass** die Genauigkeit von Temperatursteuerung zum Abschrecken und Anlassen in Schritt (5) ±10 °C ist.

8. Verfahren zum Produzieren einer verschleißfesten Stahlplatte mit hervorragender Oberflächenqualität nach Anspruch 4, **dadurch gekennzeichnet, dass**: in Schritt (3) für die gewalzte Stahlplatte Wasserkühlung streng verboten ist und Stapeln von langsamer Kühlung oder Abdecken von langsamer Kühlung oder Luftkühlung zum Kühlen übernommen wird.

## Revendications

1. Plaque d'acier résistant à l'usure ayant une excellente qualité de surface, **caractérisée en ce que** les constituants chimiques en pourcentage massique sont C : 0,12-0,20 %, Si : ≤ 0,1 %, Mn : 0,6-1,20 %, Nb : 0,010-0,040 %, V : ≤ 0,01 %, Ti : 0,010-0,030 %, Al : ≤ 0,04 %, Ni : ≤ 0,1 %, Cu : ≤ 0,1 %, Cr : 0,10-0,40 %, Mo : ≤ 0,1 %, B : 0,001 - 0,005 %, Ca : 0,0010 - 0,0050 %, P : ≤ 0,010 %, s : ≤ 0,0015 %, O : ≤ 0,0012 %, N : ≤ 0,0035 %, H : ≤ 0,0002 %, et le reste est constitué de Fe et d'éléments d'impureté inévitables ;
dans laquelle l'acier présente une résistance à la traction de ≥ 1200 MPa, un allongement de ≥12 % et une énergie d'impact longitudinal en forme de V de Charpy à -40 °C de ≥ 30 J ; la dureté de Brinell satisfait 360-460 HB.

2. Plaque d'acier résistante à l'usure ayant une excellente qualité de surface selon la revendication 1, dans laquelle ses constituants chimiques satisfont que la valeur d'équivalent carbone CEV est ≤ 0,40 selon une formule CEV=C+Mn/6+(Cr+Mo+V)/5+(Ni+Cu)/15 ; selon une formule PCM=C+Si/30+(Mn+Cu+Cr)/20+Ni/60+Mo/15+V/10+5B, le coefficient de sensibilité aux fissures de soudage PCM ≤ 0,25.

3. Plaque d'acier résistant à l'usure ayant une excellente qualité de surface selon la revendication 1, dans laquelle, lorsque le produit est une plaque d'acier, l'épaisseur de la plaque d'acier est de 4-20 mm.

4. Procédé de production de la plaque d'acier résistante à l'usure des revendications 1 à 3, comprenant les étapes suivantes :
(1) Fusion
fusion par convertisseur, régulation de la basicité de laitier final R (CaO/SiO2) ≥ 3, réalisation du découpage de laitier, et le laitier par tonne d'acier est régulé à ≤ 3 kg ; envoi d'acier fondu à un four d'affinage LF pour affinage, la teneur en FeO+MnO dans le laitier est régulée à ≤ 2 %, et la teneur en SiO₂ à ≤ 8 %, la teneur en Al₂O₃ à ≤ 15 %-35 % ; le temps d'affinage à ≤ 1 heure ; l'envoi de l'acier fondu affiné à VD ou à RH pour traitement sous vide, où le degré de vide est de ≤ 0,5 mbar, et le temps n'est pas inférieur à 30 min ; l'utilisation de fils de fer calcique pour remplacer les fils de calcium de silicium traditionnels pour le traitement Ca ; les inclusions sont régulées de sorte qu'une somme des grades des groupes A, B, C et D est ≤ 2,5 ;
(2) Coulée continue
versement à faible surchauffe et sous protection à l'argon pendant toute la durée du processus, et adoption d'une régulation dynamique de réduction douce ;
(3) Chauffage et laminage
la température de chauffage de la dalle est régulée à 1100-1180°C ; en régulant que la période de trempage de la dalle dans le four ne dépasse pas 1 heure ;
réalisation d'un décalaminage à l'eau à haute pression avant de commencer un laminage de plaque d'acier, mise en œuvre d'un décalaminage à haute pression à la première passe et aux deux dernières passes de laminage grossier ; régulation de la température d'une tête et d'une queue d'une dalle intermédiaire après le laminage grossier à ≤ 1000 °C ; augmentation d'une température de début de laminage de finition à ≥ 930 °C ; afin de réduire rapidement la température de laminage, un décalaminage à l'eau à haute pression est utilisé avant le laminage de finition, le nombre total des passes avec décalaminage pendant le laminage de finition n'est pas inférieur à 3 passes, et régulation de la température de laminage final à ≥ 800 °C ; pour la plaque d'acier laminée, un refroidissement accéléré, tel qu'un refroidissement à l'eau, est interdit ;
(4) Grenaillage
la plaque d'acier doit être grenaillée avant le traitement thermique, pour éliminer une calamine d'oxyde complète et dense à la surface de la plaque d'acier ;
(5) Trempe et revenu
la plaque d'acier est trempée à 880-940 °C, et le temps de maintien est de 20-60 min après que la température du four atteint la température souhaitée ; la plaque d'acier est revenue à une température basse, la température de revenu est de 150-250 °C, et le temps de maintien est de 30-60 min après que la température du four atteint la température souhaitée.

5. Procédé de production de plaque d'acier résistant à l'usure ayant une excellente qualité de surface selon la revendication 4, **caractérisé en ce qu'**à l'étape (3), la surchauffe de l'acier fondu est régulée à 5-20 °C, et la ségrégation centrale n'est pas supérieure au grade C1.0.

6. Procédé de production d'une plaque d'acier résistant à l'usure ayant une excellente qualité de surface selon la revendication 4, **caractérisé en ce que** dans l'étape (4), lors du décalaminage avec de l'eau à haute pression, la pression de décalaminage au niveau de la buse est ≥ 21 MPa.

7. Procédé de production d'une plaque d'acier résistant à l'usure ayant une excellente qualité de surface selon la revendication 4, **caractérisé en ce que** la précision de la régulation de la température pour la trempe et le revenu à l'étape (5) est de ±10 °C.

8. Procédé de production d'une plaque d'acier résistant à l'usure ayant une excellente qualité de surface selon la revendication 4, **caractérisé en ce que** : à l'étape (3), pour la plaque d'acier laminée, le refroidissement à l'eau est strictement interdit, et le refroidissement par empilement lent ou le refroidissement par couverture lente ou le refroidissement par air est adopté pour le refroidissement.
